(19) Europäisches Patentamt
European Patent Office
Office européen des brevets

(11) Publication number: 0 182 940 B1

(12) EUROPEAN PATENT SPECIFICATION

(45) Date of publication of patent specification: 11.04.90

(51) Int. Cl.[5]: C 07 C 215/02, C 10 M 159/16, C 10 L 1/22

(21) Application number: 84307826.2

(22) Date of filing: 13.11.84

# (54) Mannich base oil additives.

(43) Date of publication of application:
04.06.86 Bulletin 86/23

(45) Publication of the grant of the patent:
11.04.90 Bulletin 90/15

(84) Designated Contracting States:
AT BE DE FR GB IT NL SE

(56) References cited:
US-A-4 025 316
US-A-4 396 517

The file contains technical information submitted after the application was filed and not included in this specification

(73) Proprietor: MOBIL OIL CORPORATION
150 East 42nd Street
New York New York 10017 (US)

(72) Inventor: Horodysky, Andrew Gene
139 Weston Drive
Cherry Hill New Jersey 08003 (US)
Inventor: Gemmill, Robert MacDonald, Jr.
413 Wildwood Avenue
Pitman New Jersey 08071 (US)

(74) Representative: Cooper, John Anthony et al
Mobil Court 3 Clements Inn
London WC2A 2EB (GB)

EP 0 182 940 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to novel additives made from medium-chain 1-olefin oligomer alkylated phenols, aldehyde and hydrocarbyl amines, and to lubricant and liquid fuel compositions containing same.

Much effort has been directed to providing a lubricant which will permit present-day automotive engines to be operated at a high level of efficiency over long periods of time. One difficulty encountered is that lubricating oils tend to deteriorate under the conditions of use, resulting in the formation of sludge, lacquer, and resinous materials, which adhere to the engine parts and lower the operating efficiency of the engine.

U.S. 4025316 discloses a combined lubricant and fuel composition for the lubrication of a 2-stroke cycle gasoline engine which comprises a gasloline to which has been added a minor amount of petroleum lubricating oil containing an oil soluble Mannich base as a detergent-antiscuff additive, said Mannich base comprising the reaction product of about two molar proportions of $C_{14}$—$C_{24}$ mono alkyl phenol, about two to eight molar proportions of a formaldehyde, and about a molar proportion of a nitrogen containing material selected from the group consisting of ammonia, alkylene diamine, polyalkene polyamines, and hexamethylene tetramine, and wherein: said oil has been added in an amount of from about 1 to 5 parts and said Mannich base has added in an amount of from about 0.03 to 0.75 parts, per 100 parts of gasoline.

However, friction is also a problem any time two surfaces are in sliding or rubbing contact. It is especially significant in an internal combustion engine and related power train components, because loss of substantial amount of the theoretical mileage possible from a given quantity of fuel is traceable directly to friction. The Mannich bases of this invention unexpectedly are effective in decreasing this friction.

According to the present invention, there is provided a reaction product made by reacting an aldehyde, at least one amine, and at least one alkyl-substituted phenol wherein the alkyl substituent is branched and derived from a 1-olefin oligomer wherein the 1-olefin has from 8 to 12 carbon atoms and the 1-olefin oligomer has from 16 to 40 carbon atoms.

The present invention also provides a lubricant or liquid fuel composition comprising a major portion of liquid fuel or lubricant and an antioxidant or friction reducing amount of such a reaction product.

This invention further relates to the use of such a reaction product to reduce oxidation or friction in internal combustion engines.

The reaction products according to this invention are suitably made from (1) a medium molecular weight alkyl-substituted phenol, wherein the alkyl substituent is a branched oligomer made from a 1-olefin and having no more than an average of 40 carbon atoms, (2) an aldehyde and (3) a hydrocarbyl amine wherein the respective molar ratio of reactants is 1.0:1.0—2.0:1.0—2.0. The reaction involved, in one of its aspects, can be represented by the following:

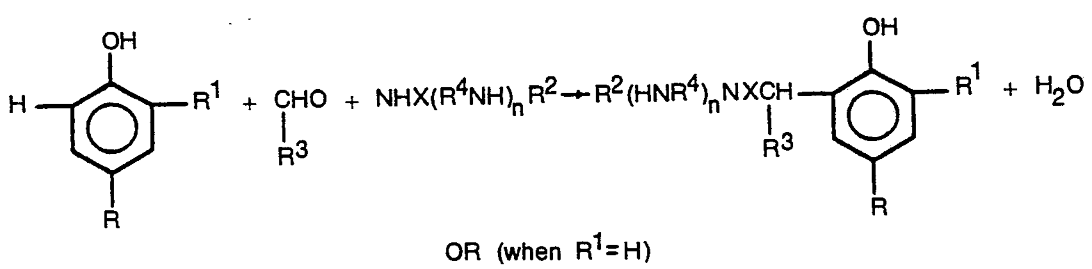

OR (when $R^1$=H)

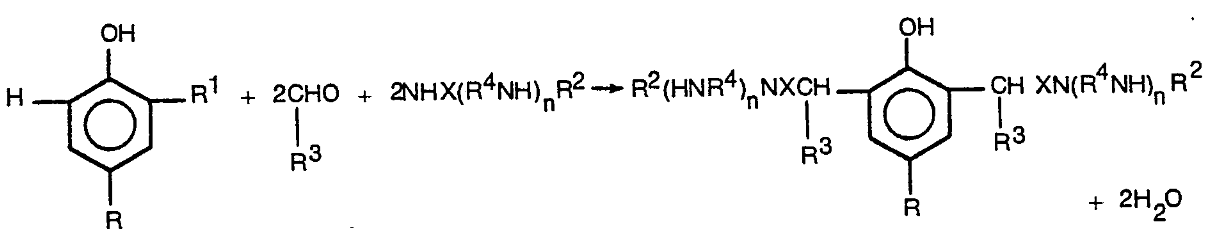

wherein R is a branched alkyl group having from about 16 to 40 carbon atoms derived from a 1-olefin having from 8 to 12 carbon atoms, $R^1$ is hydrogen or R, $R^2$ is a hydrogen or unsubstituted or substituted, for example, hydroxy- or halo-substituted hydrocarbyl group, preferably alkyl, containing 6 to 18 carbon atoms, X is hydrogen or $R^2$, $R^3$ is hydrogen or a hydrocarbyl group containing 1 to 10 carbon atoms, preferably an alkyl group, $R^2$ and $R^3$ can also contain hydroxyl, halogen, $R^4$ is alkylene having 1 to 5 carbon atoms and n is from 1 to 10. The reaction can be run at from about 60°C to about 130°C, using a hydrocarbon solvent. Such solvents can include benzene, xylene, and toluene. The water formed during the reaction is removed by azeotropic distillation while refluxing the mixture.

The precursor phenols contemplated for use in forming the alkylated phenols and making the products of this invention include phenol itself and cresol, xylenol, hydroxydiphenyl, amylphenol, benzylphenol,

alpha and beta naphthols. Specific alkylated phenols include decene dimer phenol, decene trimer phenol, octene dimer and trimer phenol and including mixtures of these.

Aldehydes contemplated by the present invention are aliphatic aldehydes, typified by formaldehyde or paraformaldehyde, acetaldehyde and aldol(β-hydroxybutyraldehyde); aromatic aldehydes, such as benzaldehyde and heterocyclic aldehydes, such as furfural. The $R^3$ group of the aldehyde may contain a substituent group as hydroxyl, halogen, nitro and the like. In short, any substituent can be used which does not take a major part in the reaction. Preference, however, is given to the aliphatic aldehydes, formaldehyde being particularly preferred.

The amines and the mixtures thereof contemplated herein are preferably those which contain a primary amino group. It is contemplated that these preferred amines include saturated and unsaturated aliphatic primary monoamines containing 6 to 18 carbon atoms. More specifically, they include those shown in the above reaction scheme and disclosed hereinbelow, as well as such typical amines as: polyalkylenepolyamines, such as ethylenediamine and propylenediamine; poly-alkenepolyamines, such as those of the formula

$$NH_2(R^4NH)_nH$$

wherein $R^4$ is an alkylene group having from 1 to 5 carbon atoms and n is from 1 to 10. Examples of these are ethylenediamine, propylenediamine, dimethylenetriamine, diethylenetriamine, triethylenetetramine, tetraethylenepentamine and hexaethyleneheptamine. Cyclic amines are also contemplated and include cyclohexylamine and dicyclohexylamine.

Still more specifically, the amines contemplated are cocoamine, oleylamine, octylamine, nonylamine, decylamine, cyclooctylamine, dodecylamine, tetradecylamine, hexadecylamine, octadecylamine, stearylamine, laurylamine, soyamine, dibutylamine, dioctylamine and other secondary amines, ethanolamine, diethanolamines and other alkanolamines.

The alkyl phenols of this invention may be made by reacting 0.1 to 10 moles of phenol with 1 mole of a 1-olefin oligomer in the presence of an alkylation catalyst, such as a complex of $BF_3$ (including the etherate, phenolate or phosphate complexes), $BF_3$ or HCl gas with $AlCl_3$, at 80°C to 250°C. This process is particularly effective when conducted by reacting 1 to 1.5, or especially 1.25 moles of phenol to 1 mole of an olefin oligomer in the presence of a $BF_3$ phenolate at about 150°C. The product is conveniently dissolved in an aromatic solvent and then washed with water to remove unreacted components. Upon filtration and removal of the aromatic solvent by distillation, the product, a clear viscous oil, remains.

The above-described reaction products are Mannich bases formed from the specified reactants and have been found to have a not only generally applicable anti-friction qualities, but also the ability to reduce fuel consumption in an internal combustion engine.

The Mannich base additives can be used in a wide variety of systems at from about 0.1% to about 10% by weight, but preferably about 0.10% to about 4.0%.

Transmission fluids illustrate one system in which the present additives can be used. These are blends of highly refined petroleum base oils combined with VI improvers, detergents, defoamants and special additives to provide controlled-friction or lubricity characteristics. Varied transmission design concepts have led to the need for fluids with markedly different frictional characteristics, so that a single fluid cannot satisfy all requirements. The fluids intended for use in passenger car and light-duty truck automatic transmissions are defined in the ASTM Research Report D—2:RR 1005 on "Automatic Transmission Fluid/Power Transmission Fluid Property and Performance Definitions" Specifications for low temperature and aircraft fluids are defined in U. S. Government Specification MIL—H—5606A. In addition, the oxidation and corrosion resistance of functional fluids such as hydraulic fluids can be improved by the adducts of the present invention.

Of particular significance, in accordance with the present invention, is the ability of the Mannich base additives to improve a variety of properties of lubricants and liquid fuels, hydrocarbon and alcoholic fuels and their mixtures. These Mannich base additives improve the wear resistance or friction qualities of lubricated parts and they improve resistance to oxidation and corrosion of oleaginous materials such as lubricating media.

The liquid fuels improved in accordance with the present invention comprise those which are normally susceptible to forming undesirable carburetor and intake valve deposits in internal combustion engines. Specifically, liquid hydrocarbon fuels boiling from about 75°F to about 750°F, including gasoline, jet fuel and dies fuel may be mentioned. Of particular significance is the treatment of petroleum distillate fuels having an initial boiling point of about 75°F to about 135°F and an end boiling point from about 250°F to about 750°F. It should be noted, in this respect, that the term "distillate fuels" or "distillate fuel oils" is not intended to be restricted to straight-run distillate fractions. These distillate fuel oils can comprise straight run distillate fuel oils, catalytically or thermally cracked (including hydrocracked) distillate fuel oils or mixtures of straight run distillate fuel oils, naphthas and the like, with cracked distillate stocks. Moreover, such fuel oils can be treated in accordance with such well known commercial methods as acid or caustic treatment, hydrogenation, solvent refining, clay treatment and the like.

The distillate fuels are characterized by their relatively low viscosity, pour point and the like. The principle property which characterizes these hydrocarbons, however, is their distillate range. As hereinbefore indicated, this range will lie between about 75°F and about 750°F. Obviously the distillation

range of each individual fuel will cover a narrower boiling range, falling nevertheless, within the above-specified limits. Likewise, each fuel will boil substantially continuously throughout its distillation range.

In addition to the hydrocarbon fuels mentioned, other fuels improved by the disclosed additives are alcohols such as methyl alcohol and ethyl alcohol, mixtures thereof and mixtures with the mentioned hydrocarbon fuels.

Particularly contemplated among the fuels or fuel oils are Nos. 1, 2 and 3 fuel oils, used in heating and as diesel fuel oils, gasoline and jet combustion fuels. The domestic fuel oils generally conform to the specifications set forth in ASTM specification D396—48T. Specifications for diesel fuels are defined in ASTM specification D975—48T. Typical jet fuels are defined in military specification MIL—F—624B In addition, fuel oils of varying viscosity and pour points falling both within and outside the indicated ranges may also be effectively treated through the use of the additives of the present invention.

The disclosed products may also be incorporated in lubricating media which may comprise liquid hydrocarbon oils in the form of either a mineral oil or a synthetic oil, or mixtures thereof, or in the form of a grease, in which any of the aforementioned oils are employed as a vehicle. These can also contain detergents and dispersants, as well as antioxidants, inhibitors, antiwear, extreme pressure, antifoam, pour depressant and viscosity index improving additives without negating the beneficial properties of the novel compositions of this invention. The compositions can include commonly used additives such as phenates, sulfonates, polymers, metal dithiophoisphates, succinimides, and the like. In general, mineral oils employed as the lubricant of grease vehicle may be of any suitable lubricating viscosity range as, for example, from about 45 SSU at 100°F to about 6,000 SSU at 100°F, and preferably from about 50 SSU at 210°F to about 250 SSU at 210°F. These oils may have viscosity indexes varying from below 0 to about 100 or higher. Viscosity indexes from about 70 to about 95 are preferred. The average molecular weights of these oils may range from about 250 to 800. Where the lubricant is to be employed in the form of a grease, the lubricating oil is generally employed in an amount sufficient to balance the total grease composition, after accounting for the desired quantity of the thickening agent, and other additive components to be included in the grease formulation.

In instances where synthetic oils and mixtures of synthetic oil and mineral oil are desired in preference to mineral oils only, various compounds of this type may be successfully utilized. Typical synthetic vehicles include polyisobutylene, polybutenes, hydrogenated polydecenes, polypropylene glycol, polyethylene glycol, trimethylol propane esters, neopentyl and pentaerythritol esters, di(2-ethylhexyl) sebacate, di(2-ethylhexyl) adipate, di(-butylphthalate) fluorocarbons, silicat esters, silanes, esters of phosphorus-containing acids, liquid acids, liqud ureas, ferrocene derivatives, hydrogenated mineral oils, chain-type polyphenols, siloxanes and silicones (polysiloxanes), alkyl-substituted diophenyl ethers typified by a butyl-substituted bis(p-penoxyl phenyl) ether, phenoxy phenylethers, etc.

Where the lubricant is to be employed in the form of a grease, the lubricating oil is generally employed in an amount sufficient to balance the total grease composition, after accounting for the desired quantity of the thickening agent, and other additive components to be included in the grease formulation. A wide variety of materials may be employed as thickening or gelling agents. These may include any of the conventional metal salts or soaps, which are dispersed in the lubricating vehicle in greaseforming quantities in an amount to impart to the resulting grease composition the desired consistency. Other thickening agents that may be employed in the grease formulation may comprise the non-soap thickeners, such as surface-modified clays and silicas, aryl ureas, calcium complexes and similar materials. In general, grease thickeners may be employed which do not melt and dissolve when used at the required temperature within a particular environment; however, in all other respects, any material which is normally employed for thickening or gelling hydrocarbon fluids for forming grease can be used in preparing the aforementioned improved grease in accordance with the present invention.

Fuel compositions will contain from about 5 to about 500 pounds of additive per 1000 barrels of fuel, preferably about 20 to about 120 pounds per 1000 barrels.

It is to be understood that the compositions contemplated herein can also contain other materials. For example, other corrosion inhibitors, extreme pressure agents, antiwear agents, defoamants, detergents, dispersants, and the like can be used, including phenates, sulfonates, zinc dithiophosphates and succinimides. These materials do not detract from the value of the compositions of this invention. Rather, the materials serve to impart their customary properties to the particular compositions in which they are incorporated.

The following examples will illustrate the invention. They are illustrative only, and are not intended to limit the invention.

### Example 1

### Decene Trimer Aklylated Phenol-Cocoamine-Formaldehyde Condensation Reaction Product

Approximately 42 g (about 0.2 moles) of cocoamine, 72 g of 1-decene trimer alkylated phenol, 6.5 g (about 0.2 moles) of paraformaldehyde and 100 g of benzene solvent were placed in a 500 ml glass reactor fitted with a nitrogen inlet, stirrer, thermometer, Dean-Stark tube and condenser. The reaction mixture was heated with agitation using a nitrogen blanket to a maximum temperature of about 115°C until water evolution stopped. The solvent was removed by vacuum distillation. The reaction product was filtered through diatomaceous earth at about 70°C and was collected as a clear, amber colored liquid.

Example 2

Decene Dimer Alkylated Phenol-Cocoamine-Formaldehyde Condensation Reaction Product

Approximately 45 g (about 0.2 moles) of cocoamine, 100 g of 1-decene dimer alkylated phenol, 6.5 g (about 0.2 moles) of paraformaldehyde and 75 g of benzene solvent were placed in a reactor equipped as described in Example 1. The reaction mixture was heated with agitation and a nitrogen blanket to a maximum temperature of 120°C over a period of 3 hours until water evolution stopped. The solvent was removed by vacuum distillation. The reaction product was filtered through diatomaceous earth at about 70°C and was collected as a clear, amber colored liquid.

Example 3

One mole of polybutylphenol (made by reacting phenol with polyisobutylene in the presence of $BF_3$ catalyst), 0.58 mole of tetraethylenepentamine and 1.95 moles of paraformaldehyde were reacted as described in Examples 1 and 2, except that the reaction product was diluted 50:50 with a process oil.

Example 4

Decene Trimer Alkylated Phenol-Triethylenetetraamine-Formaldehyde Condensation Reaction Product

Approximately 82.6 grams of triethylene tetraamine, 1030 grams of 1-decene trimer alkylated phenol and 37.2 grams of paraformaldehyde were loaded into a reaction vessel fitted with a nitrogen inlet stirrer, thermometer, Dean-Stark tube and condenser. The reaction mixture was heated to a temperature of about 100°C for about one hour. The temperature was then raised to 150°C for a period of one hour while water was evolved. Reduced pressure of 100 mm for 0.5 hours at 150°C was then applied. A total of 25 grams of water was collected. The reaction product was then filtered through dialomaceous earth and was collected as a clear amber fluid.

EVALUATION OF THE REACTION PRODUCTS

The reaction products of Examples 1, 2 and 3 were evaluated in a low velocity friction apparatus (LVFA) in a fully formulated 5W—20 synthetic engine oil containing an additive package including antioxidant, dispersant and detergent. The reaction product test compound was 4% of the total weight of oil.

The low velocity friction appartus (LVFA) is used to measure the coefficient of friction of test lubricants under various loads, temperatures, and sliding speeds. The LVFA consists of a flat SAE 1020 steel surface (diam. 1.5 in.) which is attached to a drive shaft and rotated over a stationary, raised, narrow ringed SAE 1020 steel surface (area 0.08 in.$^2$). Both surfaces are submerged in the test lubricant. Friction between the steel surfaces is measured as a function of the sliding speed at a lubricant temperature of 250°F. The friction between the rubbing surfaces is measured using a torque arm-strain gauge system. The strain gauge output, which is calibrated to be equal to the coefficient of friction, is fed to the *Y* axis of an *X*—*Y* plotter. The speed signal from the tachometer-generator is fed to the X-axis. To minimize external friction, the piston is supported by an air bearing. The normal force loading the rubbing surfaces is regulated by air pressure on the bottom of the piston. The drive system consists of an infinitely variable-speed hydraulic transmission driven by a 1/2 HP electric motor. To vary the sliding speed, the output speed of the transmission is regulated by a lever-cam-motor arrangement.

The rubbing surfaces and 12—13 ml of test lubricant are placed on the LVFA. A 240 psi load is applied, and the sliding speed is maintained at 40 fpm at ambient temperature for a few minutes. Plots of coefficients of friction ($U_k$ vs. speed were taken at 240, 300, 400, and 500 psi. Freshly polished steel specimens are used for each run. The surface of the steel is parallel ground to 4 to 8 microinches. The results in Table 1 refer to percent reduction in coefficient of friction compared to the unmodified oil. That is, the formulation mentioned above was tested without the compound of this invention and this became the basis for comparison. The following results were obtained at 250°F and 500 psi.

TABLE 1

Friction Reduction Properties Low Velocity Friction Apparatus Test

| Medium and Additive | Additive Conc. wt. % | Percent Reduction in Coefficient of Friction, % 5 Ft./Min. | 30 Ft./Min. |
|---|---|---|---|
| Base Oil only | 0 | 0 | 0 |
| Example 1 | 4 | 20 | 25 |
| Example 2 | 4 | 18 | 23 |
| Example 3 | 4* | 0 | 0 |

*8% of 50% active product

The results clearly show substantial friction-reducing properties for the 1-olefin oligomer derived alkylated phenol Mannich base condensation product. Example 3, which represents products like those disclosed in U.S. 3,368,972, has no friction reducing properties as measured in this test.

The products of Examples 1 and 2 were blended into a 200" solvent paraffinic neutral lubricating oil samples of which were evaluated for oxidative stability using the Catalytic Oxidation Test by placing them in an oven at 325°F for 40 hours.

The samples were in the presence of the following metals known to catalyze organic oxidation:

a. 15.6 sq. in of sand blasted iron wire;
b. 0.78 sq. in. of polished copper wire;
c. 0.87 sq. in. of polished aluminum wire;
d. 0.167 sq. in of polished lead surface.

Dry air was passed through the test samples at a rate of about 5 liters per hour for the full 40 hours. The results demonstrate the antioxidant properties incorporated into these friction-reducing compositions.

TABLE 2

Oxidation Characteristics Catalytic Oxidation Test, 40 Hours @ 325°F

| Medium and Additive | Additive Conc. Wt. % | % Increase in Viscosity of Oxidized Oil Using KV @ 100°C | Neutralization Number |
|---|---|---|---|
| Base Oil Only | 0 | 67 | 3.62 |
| Example 1 | 1 | 33 | — |
| Example 2 | 1 | 25 | 3.20 |

The results clearly show substantial antioxidant properties for the 1-olefin oligomer derived alkylated phenol Mannich base condensation product.

The reaction product of Example 4 was then evaluated in an IFP Renault R-5 Carburetor Detergeny Test using a base fuel consisting of a commercially available regular leaded gasoline containing approximately 0.45 grams Pb/lLiter.

The test procedure employed was similar to that disclosed in Coordinating Research Council (CRC) Report No. 529, published in April 1983. The engine employed is a Renault 810—26 (R5 GTL) with some modification to the piston ring pack, manifold, air cleaner and oil circulation system. It is fitted with a Solex 32 SEIA single body carburetor.

The engine was run for a total of 12 hours under cyclic RPM conditions. Basically, the engine was allowed to idle at 800 RPM for 2 minutes followed by 8 minutes at 1800 RPM under a load of 5.85 hp. Engine speed was then allowed to drop back down to idle and the start of another operational cycle. Upon the completion of 12 hours, the carburetor and intake system were inspected for deposits. The test results are set forth below.

Carburetor Cleanliness Rating

| Rating Method | Base Fuel | Base Fuel + 308 ppm of Ex. 4 | Difference |
|---|---|---|---|
| BNPE(1) | 0.7 | 6.4 | +5.7 |
| CRC(2) | | | |
| —above throttle plate | 3.5 | 7.7 | +4.2 |
| —below throttle plate | 1.8 | 6.6 | +4.8 |
| —throttle plate | 3.5 | 6.9 | +3.4 |

(1) Standard Institut Francais de Petrol (IFP) method were 10 = clean, 0 = black.
(2) Coordinating Research Council (CRC) method were 10 = clean, 1 = black.

**Claims for the Contracting States: BE DE FR GB IT NL SE**

1. A reaction product made by reacting an aldehyde, at least one amine and at least one alkyl-substituted phenol wherein the alkyl substituent is branched and derived from a 1-olefin oligomer characterised in that the 1-olefin has from 8 to 12 carbon atoms and in that the 1-olefin oligomer has from 16 to 40 carbon atoms.

2. A product according to claim 1 wherein the phenol has the formula:

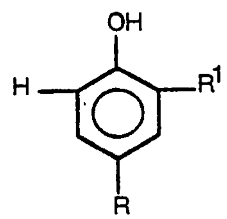

wherein:

R represents a branched alkyl group derived from a 1-olefin oligomer having 16 to 40 carbon atoms; and

$R^1$ represents a hydrogen atom or R as hereinbefore defined.

3. A product according to any preceding claim wherein the aldehyde has the formula:

$$R^3CHO$$

wherein:

$R^3$ represents hydrogen atom or a substituted or unsubstituted hydrocarbyl group containing from 1 to 10 carbon atoms.

4. A product according to any preceding claim wherein the aldehyde is an aromatic, aliphatic or heterocyclic aldehyde.

5. A product wherein the aldehyde is formaldehyde, paraformaldehyde, acetaldehyde, β-hydroxy-butyraldehyde, benzaldehyde or furfural.

6. A product according to claim 5 wherein the aldehyde is paraformaldehyde.

7. A product according to any preceding claim wherein the amine has the formula:

$$NHX(R^4NH)_nR^2$$

wherein:

$R^2$ represents a hydrogen atom or a hydrocarbyl group or a hydroxyhydrocarbyl group containing 6 to 18 carbon atoms;

X represents a hydrogen atom or $R^2$;

$R^4$ represents an alkylene group having 1 to 5 carbon atoms; and

n represents a number from 0 to 10.

8. A product according to claim 7 wherein the amine is cocoamine, oleylamine, octylamine, nonylamine, decylamine, cyclooctylamine, dodecylamine, tetradecylamine, hexadecylamine, octadecylamine, stearylamine, laurylamine, soyamine, dibutylamine, dioctylamine, ethanolamine, diethanolamine, dimethylenetriamine, diethylenetriamine, triethylenetetramine, tetraethylenepentamine, hexaethyleneheptamine, ethylenediamine, propylenediamine, cyclohexylamine or dicyclohexylamine.

9. A product according to any preceding claim wherein the alkylated phenol is 1-decene trimer alkylated phenol, the aldehyde is paraformaldehyde and the amine is cocoamine.

10. A product according to any preceding claim wherein the alkylated phenol is 1-decene dimer alkylated phenol, the aldehyde is paraformaldehyde and the amine is cocoamine.

11. A lubricant or liquid fuel composition comprising (i) a major proportion of liquid fuel or lubricant and (ii) an antioxidant or friction reducing amount of the reaction product according to any preceding claim.

12. A composition according to claim 11 wherein the lubricant (i) comprises a mineral lubricating oil, a synthetic lubricating oil, mixtures thereof or a grease prepared from any of these.

13. A composition according to claim 11 wherein the liquid fuel (i) comprises an automotive internal combustion engine fuel.

14. Use of a reaction product according to any of claims 1 to 10 to reduce oxidation or friction in internal combustion engines.

**Claims for the Contracting State: AT**

1. A process for making an oxidation or friction reducing agent comprising reacting

(a) at least one alkyl-substituted phenol wherein the alkyl substituent is branched and is derived from a 1-olefin oligomer wherein the 1-olefin has from 8 to 12 carbon atoms and the 1-olefin oligomer has from 16 to 40 carbon atoms;

(b) an aldehyde; and

(c) at least one amine.

2. A process according to claim 1 wherein the molar ratio of (a):(b):(c) is 1.0:1.0—2.0:1.0—2.0.

3. A process according to claim 1 or 2 wherein the reaction among (a), (b) and (c) is conducted at a temperature from 60° to 130°C.

4. A process according to any of the preceding claims wherein the phenol has the formula

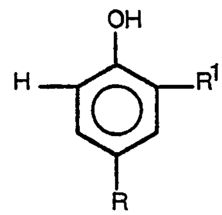

wherein:

R represents a branched alkyl group derived from a 1-olefin oligomer having 16 to 40 carbon atoms; and

$R^1$ represents a hydrogen atom or R as hereinbefore defined.

5. A process according to any of the preceding claims wherein the aldehyde has the formula

$$R^3CHO$$

wherein:

$R^3$ represents hydrogen atom or a substituted or unsubstituted hydrocarbyl group containing from 1 to 10 carbon atoms.

6. A process according to any of the preceding claims wherein the aldehyde is an aromatic, aliphatic or heterocyclic aldehyde.

7. A process according to any of the preceding claims wherein the aldehyde is formaldehyde, paraformaldehyde, acetaldehyde, -hydroxybutyraldehyde, benzaldehyde or furfural.

8. A process according to any of the preceding claims wherein the amine has the formula:

$$NHX(R^4NH)_nR^2$$

$R^2$ represents a hydrogen atom or a hydrocarbyl group or a hydroxyhydrocarbyl group containing 6 to 18 carbon atoms;

Z represents a hydrogen atom or $R^2$;

$R^4$ represents an alkylene group having 1 to 5 carbon atoms; and

n represents a number from 1 to 10.

9. A process according to any of the preceding claims wherein the amine is cocoamine, oleylamine, octylamine, nonylamine, decylamine, cyclooctylamine, dodecylamine, tetradecylamine, hexadecylamine, octadecylamine, stearylamine, laurylamine, soyamine, dibutylamine, dioctylamine, ethanolamine, diethanolamine, dimethylenetriamine, diethylenetriamine, triethylenetetramine, tetraethylenepentamine, hexaethyleneheptamine, ethylenediamine, propylenediamine, cyclohexylamine or dicyclohexylamine.

10. A process according to any of the preceding claims wherein the alkylated phenol is 1-decene trimer alkylated phenol, the aldehyde is paraformaldehyde and the amine is cocoamine.

11. A process according to any of the preceding claims wherein the alkylated phenol is 1-decene dimer alkylated phenol, the aldehyde is paraformaldehyde and the amine is cocoamine.

12. A process for making a lubricant or liquid fuel composition comprising mixing a major proportion of a fuel or lubricant with an antioxidant or friction reducing amount of the reaction product defined in any of claims 1 to 11.

13. A process according to claim 12 wherein the lubricant is a mineral lubricating oil, a synthetic lubricating oil, mixtures thereof or a grease prepared from any of these.

14. A process according to claim 12 or 13 wherein the fuel composition comprises an automotive internal combustion engine fuel composition.

**Patentansprüche für die Vertragsstaaten: BE DE FR GB IT NL SE**

1. Reaktionsprodukt, hergestellt durch die Reaktion eines Aldehyds, wenigstens eines Amins und wenigstens eines alkylsubstituierten Phenols, worin der Alkylsubstituent verzweigt und von einem 1-Olefinoligomer abgeleitet ist, dadurch gekennzeichnet, daß das 1-Olefin 8 bis 12 Kohlenstoffatome und das 1-Olefinoligomer 16 bis 40 Kohlenstoffatome aufweist.

2. Produkt nach Anspruch 1, worin das Phenol die Formel

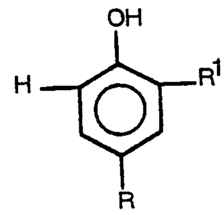

hat, worin

R eine verzweigte Alkylgruppe, die von einem 1-Olefinoligomer mit 16 bis 40 Kohlenstoffatomen abgeleitet ist, und $R^1$ ein Wasserstoffatom oder R, wie oben definiert, darstellen.

3. Produkt nach einem der vorhergehenden Ansprüche, worin der Aldehyd die Formel

$$R^3CHO$$

hat, worin

$R^3$ ein Wasserstoffatom oder einen substituierten oder unsubstituierten Kohlenwasserstoffrest, der 1 bis 10 Kohlenstoffatome enthält, darstellt.

4. Produkt nach einem der verhergehenden Ansprüche, worin der Aldehyd ein aromatischer, aliphatischer oder heterocyclischer Aldehyd ist.

5. Produkt nach Anspruch 4, worin der Aldehyd Formaldehyd, Paraformaldehyd, Acetaldehyd, β-Hydroxybutyraldehyd, Benzaldehyd oder Furfural ist.

6. Produkt nach Anspruch 5, worin der Aldehyd Paraformaldehyd ist.

7. Produkt nach einem der vorhergehenden Ansprüche, worin das Amin die Formel

$$NHX(R^4NH)_nR^2$$

hat, worin

$R^2$ ein Wasserstoffatom oder einen Kohlenwasserstoffrest oder einen Hydroxykohlenwasserstoffrest, der 6 bis 18 Kohlenstoffatome enthält,

X ein Wasserstoffatom oder $R^2$,

$R^4$ einen Alkylenrest mit 1 bis 5 Kohlenstoffatomen, und

n eine Zahl von 0 bis 10

darstellen.

8. Produkt nach Anspruch 7, worin das Amin Kokosamin, Oleylamin, Octylamin, Nonylamin, Decylamin, Cyclooctylamin, Dodecylamin, Tetradecylamin, Hexadecylamin, Octadecylamin, Stearylamin, Laurylamin, Soyamin, Dibutylamin, Dioctylamin, Ethanolamin, Diethanolamin, Dimethylentriamin, Diethylentriamin, Triethylentetramin, Tetraethylenpentamin, Hexaethylenheptamin, Ethylendiamin, Propylendiamin, Cyclohexylamin oder Dicyclohexylamin ist.

9. Produkt nach einem der vorhergehenden Ansprüche, worin das alkylierte Phenol ein mit 1-Decentrimer alkyliertes Phenol, der Aldehyd Paraformaldehyd und das Amin Kokosamin ist.

10. Produkt nach einem der vorhergehenden Ansprüche, worin das alkylierte Phenol ein mit 1-Decendimer alkyliertes Phenol, der Aldehyd Paraformaldehyd und das Amin Kokosamin ist.

11. Schmiermittel- oder Flüssigbrennstoffzusammensetzung, die (i) einen größeren Anteil eines Flüssigbrennstoffs oder Schmiermittels und (ii) eine oxidations- oder reibungsvermindernde Menge des Reaktionsprodukts nach einem der vorhergehenden Ansprüche enthält.

12. Zusammensetzung nach Anspruch 11, worin das Schmiermittel (i) ein Mineralschmieröl, ein synthetisches Schmieröl, Gemische davon oder ein Fett enthält, das aus einem dieser Stoffe hergestellt worden ist.

13. Zusammensetzung nach Anspruch 11, worin der Flüssigbrennstoff (i) einen Verbrennungsmotorbrennstoff für Automobile umfaßt.

14. Verwendung des Reaktionsprodukts nach einem der Ansprüche 1 bis 10, um die Oxidation oder Reibung in Verbrennungsmotoren zu vermindern.

**Patentansprüche für den Vertragsstaat: AT**

1. Verfahren zur Herstellung eines oxidations- oder reibungsvermindernden Mittels, das die Reaktion

(a) wenigstens eines alkylsubstituierten Phenols, worin der Alkylsubstituent verzweigt und von einem 1-Olefinoligomer abgeleitet ist, worin das 1-Olefin 8 bis 12 Kohlenstoffatome und das 1-Olefinoligomer 16 bis 40 Kohlenstoffatome aufweist.

(b) eines Aldehyds und

(c) wenigstens eines Amins,

umfaßt.

2. Verfahren nach Anspruch 1, worin das Molverhältnis von (a):(b):(c) = 1,0:1,0 bis 2,0:1,0 bis 2,0 ist.

3. Verfahren nach Anspruch 1 oder 2, worin die Reaktion zwischen (a), (b) und (c) bei einer Temperatur von 60° bis 130°C durchgeführt wird.

4. Verfahren nach einem der vorhergehenden Ansprüche, worin das Phenol die Formel

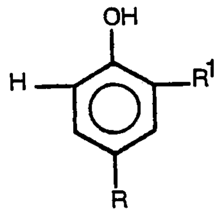

hat, worin

R eine verzweigte Alkylgruppe, die von einem 1-Olefinoligomer mit 16 bis 40 Kohlenstoffatomen abgeleitet ist, und $R^1$ ein Wasserstoffatom oder R, wie vorstehend definiert, darstellen.

5. Verfahren nach einem der vorhergehenden Ansprüche, worin der Aldehyd die Formel

$$R^3CHO$$

hat, worin

$R^3$ ein Wasserstoffatom oder einen substituierten oder unsubstituierten Kohlenwasserstoffrest, der 1 bis 10 Kohlenstoffatome enthält, darstellt.

6. Verfahren nach einem der vorhergehenden Ansprüche, worin der Aldehyd ein aromatischer, aliphatischer oder heterocyclischer Aldehyd ist.

7. Verfahren nach einem der vorhergehenden Ansprüche, worin der Aldehyd Formaldehyd, Paraformaldehyd, Acetaldehyd, β-Hydroxybutyraldehyd, Benzaldehyd oder Furfural ist.

8. Verfahren nach einem der vorhergehenden Ansprüche, worin das Amin die Formel

$$NHX(R^4NH)_nR^2$$

hat, worin

$R^2$ ein Wasserstoffatom oder einen Kohlenwasserstoffrest oder ein Hydroxykohlenwasserstoffrest, der 6 bis 18 Kohlenstoffatome enthält,

X ein Wasserstoffatom oder $R^2$,

$R^4$ eine Alkylengruppe mit 1 bis 5 Kohlenstoffatomen und

n eine Zahl von 1 bis 10 darstellen.

9. Verfahren nach einem der vorhergehenden Ansprüche, worin das Amin Kokosamin, Oleylamin, Octylamin, Nonylamin, Decylamin, Cyclooctylamin, Dodecylamin, Tetradecylamin, Hexadecylamin, Octadecylamin, Stearylamin, Laurylamin, Soyamin, Dibutylamin, Dioctylamin, Ethanolamin, Diethanolamin, Dimethylentriamin, Diethylentriamin, Triethylentetramin, Tetraethylenpentamin, Hexaethylenheptamin, Ethylendiamin, Propylendiamin, Cyclohexylamin oder Dicyclohexylamin ist.

10. Verfahren nach einem der vorhergehenden Ansprüche, worin das alkylierte Phenol ein mit 1-Decentrimer alkyliertes Phenol, der Aldehyd Paraformaldehyd und das Amin Kokosamin ist.

11. Verfahren nach einem der vorhergehenden Ansprüche, worin das alkylierte Phenol ein mit 1-Decendimer alkyliertes Phenol, der Aldehyd Paraformaldehyd und das Amin Kokosamin ist.

12. Verfahren zur Herstellung einer Schmiermittel- oder Flüssigbrennstoffzusammensetzung, das das Mischen eines größeren Anteils eines Brennstoffs oder Schmiermittels mit einer oxidations- oder reibungsvermindernden Menge des Reaktionsprodukts, wie es in einem der Ansprüche 1 bis 11 definiert ist, umfaßt.

13. Verfahren nach Anspruch 12, worin das Schmiermittel ein Mineralschmieröl, synthetisches Schmieröl, Gemische davon oder ein Fett, das aus einem dieser Stoffe hergestellt worden ist, enthält.

14. Verfahren nach Anspruch 12 oder 13, worin die Brennstoffzusammensetzung einen Verbrennungsmotorbrennstoff für Automobile enthält.

**Revendications pour les Etats contractants: BE DE FR GB IT NL SE**

1. Un produit de réaction d'un aldéhyde, d'au moins une amine et d'au moins un alkylphénol substitué dans lequel le substituant alkyle est ramifié et dérive d'un oligomère de 1-oléfine, caractérisé en ce que la 1-oléfine possède de 8 à 12 atomes de carbone et en ce que l'oligomère de 1-oléfine possède de 16 à 40 atomes de carbone.

2. Un produit selon la revendication 1, caractérisé en ce que le phénol répond à la formule:

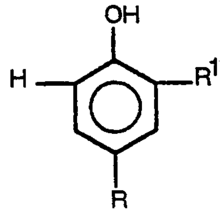

dans laquelle:

R représente un groupe alkyl ramifié et dérive d'un oligomère de 1-oléfine ayant 16 à 40 atomes de carbone; et,

$R^1$ représente un atome d'hydrogène ou R tel que défini ci-dessus.

3. Un produit selon l'une des revendications précédentes, dans lequel l'aldéhyde répond à la formule:

$$R^3CHO$$

dans laquelle:

$R^3$ représente un atome d'hydrogène ou un groupe hydrocarbyle, substitué ou non, ayant de 1 à 10 atomes de carbone.

4. Un produit selon l'une quelconque des revendications précédentes, dans lequel l'aldéhyde est un aldéhyde aromatique, aliphatique ou hétérocyclique.

5. Un produit dans lequel l'aldéhyde est un formaldéhyde, paraformaldéhyde, acétaldéhyde, β-hydroxybutyraldéhyde, benzaldéhyde ou furfural.

6. Un produit selon la revendication 5, dans lequel l'aldéhyde est un paraformaldéhyde.

7. Un produit selon l'une quelconque des revendications précédentes dans lequel l'amine répond à la formule:

$$NHX(R^4NH)_nR^2$$

dans laquelle

$R^2$ représente un atome d'hydrogène ou un groupe hydroxyhydrocarbyle ayant 6 à 18 atomes de carbone.

X représente un atome d'hydrogène ou $R^2$.

$R^4$ représente un groupe alkylène ayant 1 à 5 atomes de carbone; et,

n représente un nombre de 0 à 10.

8. Un produit selon la revendication 7, dans lequel l'amine est un cocoamine, oléylamine, octylamine, nonylamine, décylamine, cyclooctylamine, dodécylamine, tétradécylamine, hexadécylamine, octadécylamine, stéarylamine, laurylamine, soyamine, dibutylamine, dioctylamine, éthanolamine, diéthanolamine, diméthylénetriamine, diéthylénetriamine, triéthylénetétramine, tétraéthylénepentamine, hexaéthylèneheptamine, éthylénediamine, propylénediamine, cyclohexylamine ou dicyclohexylamine.

9. Un produit selon l'une quelconque des revendications précédentes, dans lequel le phénol alkylé est un phénol alkylé par un trimère de 1-décène, l'aldéhyde est un paraformaldéhyde et l'amine est une cocoamine.

10. Un produit selon l'une quelconque des revendications précédentes, dans lequel le phénol alkylé est un phénol alkylé par un dimère de 1-décène, l'aldéhyde est un paraformaldéhyde et l'amine est une cocoamine.

11. Une composition de lubrifiant ou de combustible liquide comprenant (i) une majeure proportion de combustible liquide ou de lubrifiant et (ii) le produit de réaction selon l'une des revendications précédentes, en quantité adéquate pour servir d'antioxydant et pour réduire la friction.

12. Une composition selon la revendication 11, dans laquelle le lubrifiant (i) comprend une huile minérale lubrifiante, une huile synthétique lubrifiante, ou leurs mélanges ou une graisse préparée à partir de ces huiles.

13. Une composition selon la revendication 11, dans laquelle le combustible liquide (i) comprend un carburant pour moteur d'automobile à combustion interne.

14. Application du produit de réaction selon l'une des revendications 1 à 10 pour réduire l'oxydation et le frottement dans des moteurs à combustion interne.

**Revendications pour l'Etat contractant: AT**

1. Un procédé de formation d'un agent de réduction de la fricton ou d'oxydation comprenant:

a) au moins un alkylphénol dans lequel le substituant alkyle est ramifié et dérive d'un oligomère de 1-oléfine dans lequel la 1-oléfine possède de 8 à 12 atomes de carbone et en ce que l'oligomère de 1-oléfine possède de 16 à 40 atomes de carbone

b) un aldéhyde, et

c) au moins une amine

2. Un procédé selon la revendication 1, dans lequel le rapport molaire de (a), (b). (c) est de 1,0/1,0 à 2,0/1,0 à 2,0.

3. Un procédé selon la revendication 1 ou 2, dans lequel la réaction entre (a), (b) et (c) est mise en oeuvre à une température comprise entre 60 et 130°C.

4. Un procédé selon une quelconque des revendications précédentes dans lequel le phénol répond à la formule:

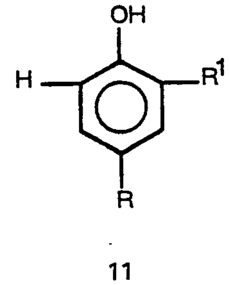

dans laquelle:

R représente un groupe alkyle ramifié et dérive d'un oligomère de 1-oléfine ayant 16 à 40 atomes de carbone; et,

$R^1$ représente un atome d'hydrogène ou R tel que défini ci-dessus.

5. Un procédé selon l'une des revendications précédentes, dans lequel l'aldéhyde répond à la formule:

$$R^3CHO$$

dans laquelle:

$R^3$ représente un atome d'hydrogène ou un groupe hydrocarbyle, substitué ou non, ayant de 1 à 10 atomes de carbone.

6. Un procédé selon l'une quelconque des revendications précédentes, dans lequel l'aldéhyde est un aldéhyde aromatique, aliphatique ou hétérocyclique.

7. Un procédé dans lequel l'aldéhyde est un formaldéhyde, paraformaldéhyde, acétaldéhyde, β-hydroxybutyraldéhyde, benzaldéhyde ou furfural.

8. Un procédé selon l'une quelconque des revendications précédentes dans lequel l'amine répond à la formule:

$$NHX(R^4NH)_nR^2$$

dans laquelle:

$R^2$ représente un atome d'hydrogène ou un groupe hydroxyhydrocarbyle ayant 6 à 18 atomes de carbone.

X représente un atome d'hydrogène ou $R^2$.

$R^4$ représente un groupe alkylène ayant 1 à 5 atomes de carbone; et,

n représente un nombre de 0 à 10.

9. Un procédé selon la revendication 1, dans lequel l'amine est une cocoamine, oléylamine, octylamine, nonylamine, décylamine, cyclooctylamine, dodécylamine, tétradécylamine, hexadécylamine, octadécylamine, stéarylamine, laurylamine, soyamine, dibutylamine, dioctylamine, éthanolamine, diéthanolamine, diméthylénetriamine, diéthylénetriamine, triéthylénetétramine, tétraéthylénepentamine, hexaéthylèneheptamine, éthylénediamine, propylénediamine, cyclohexylamine ou dicyclohexylamine.

10. Un procédé selon l'une quelconque des revendications précédents, dans lequel le phénol alkylé est un phénol alkylé par un trimère de 1-décène, l'aldéhyde est un paraformaldéhyde et l'amine est une cocoamine.

11. Un procédé selon l'une quelconque des revendications précédents, dans lequel le phénol alkylé est un phénol alkylé par un dimère de 1-décène, l'aldéhyde est un paraformaldéhyde et l'amine est une cocoamine.

12. Un procédé de formation d'une composition de lubrifiant ou de combustible liquide comprenant le mélange d'une proportion majeure de combustible liquide ou de lubrifiant et le produit de réaction selon l'une des revendications 1 à 11, en quantité adéquate pour servir d'anti-oxydant et pour réduire la friction.

13. Un procédé selon la revendication 12 dans lequel le lubrifiant comprend une huile minérale lubrifiante, une huile synthétique lubrifiante ou leurs mélanges ou une graisse préparée à partir de ces huiles.

14. Un procédé selon la revendication 12 ou 13, dans laquelle le combustible liquide (i) comprend un carburant pour moteur d'automobile à combustion interne.